# EUROPÄISCHE PATENTSCHRIFT

(11) **EP 0 706 461 B1**
(45) Veröffentlichungstag und Bekanntmachung des Hinweises auf die Patenterteilung: **11.12.1996**
(21) Anmeldenummer: 94918299.2
(22) Anmeldetag: 16.06.1994
(51) Int. Cl.: B60K 1/02, H02K 7/116

(54) **ANTRIEBSEINHEIT**
DRIVE UNIT
UNITE D'ENTRAINEMENT

(30) Priorität: 09.07.1993 DE 4323599
(43) Veröffentlichungstag der Anmeldung: 17.04.1996
(73) Patentinhaber: MANNESMANN Aktiengesellschaft, 40213 Düsseldorf (DE)
(72) Erfinder: LUTZ, Dieter, D-97422 Schweinfurt (DE); JAKUBOWSKI, Karl-Heinz, D-44581 Castrop-Rauxel (DE); BERGER, Günter, D-44577 Castrop-Rauxel (DE); DAMM, Horst, D-45549 Sprockhövel (DE)
(74) Vertreter: Meissner, Peter E., Dipl.-Ing.
(86) Internationale Anmeldenummer: DE9400719
(87) Internationale Veröffentlichungsnummer: WO9501883

(56) Entgegenhaltungen:
- EP-A- 0 249 807
- EP-A- 0 253 999
- EP-A- 0 445 845
- DE-A- 3 231 960
- DE-A- 3 605 703
- US-A- 3 250 973
- DATABASE WPI Week 8228, Derwent Publications Ltd., London, GB; AN 82-J2658E & DE,A,31 44 447 (PAPST-MOTOREN GMBH) 8. Juli 1982

## Beschreibung

Die Erfindung betrifft eine Antriebseinheit, die insbesondere für den Fahrantrieb von Straßenfahrzeugen geeignet ist, gemäß dem Oberbegriff des Patentanspruchs 1.

Solche Fahrantriebe müssen, um in technischer Hinsicht mit herkömmlichen Antrieben auf der Basis von Verbrennungsmotoren und konventionellen Antriebssträngen konkurrieren zu können, hohe Leistungen bei möglichst kompakter Bauweise erbringen können. Dabei ist es vielfach von besonderer Bedeutung, daß der Antrieb bei niedrigen Drehzahlen (z.B. Anfahrvorgang) ein hohes Drehmoment erzeugen kann. Eine Bauweise als Außenläufermaschine kommt dieser Forderung sehr entgegen.

Aus der EP 0 249 807 B1 ist eine gattungsgemäße Antriebsanordnung bekannt. Sie ist als Tandemmotor ausgebildet, d.h. sie besteht aus zwei stirnseitig und spiegelbildlich mit ihren Gehäusen aneinander angeflanschten Einzelelektromotoren. Die Elektromotoren sind jeweils als Außenläufermaschinen ausgebildet, weisen eine Permanentmagneterregung auf und sind in ihrem Durchmesser um ein Vielfaches größer als in ihrer axialen Baulänge. Damit bei niedrigen Drehzahlen ein höheres Drehmoment zur Verfügung gestellt werden kann, als dies vom Elektromotor direkt geliefert werden könnte, ist diese Antriebseinheit mit Übersetzungsgetrieben ins Langsame ausgestattet. Die Abtriebswelle jeweils eines Elektromotors ist gleichzeitig Eingangswelle eines ihm zugeordneten Getriebes. Die beiden spiegelbildlichen Teile der Antriebseinheit sind an den Stirnseiten der Getriebe zu einem Block aneinandergeflanscht. Als Getriebe sind Stirnrad- oder Zahnriemengetriebe vorgesehen. Durch die beiden Getriebe verdoppelt sich die axiale Baulänge der Antriebseinheit nahezu; außerdem vergrößert sich ihre Bauhöhe bzw. ihr Durchmesser beträchtlich.

Diese bekannte Lösung bringt eine deutliche Erhöhung der verfügbaren Drehmomente mit sich und stellt im Vergleich zu älteren Lösungen bereits eine relativ kompakte Bauweise dar. Dennoch besteht der Wunsch, das Bauvolumen und insbesondere die axiale Baulänge weiter zu reduzieren. Dies ist insbesondere deswegen wichtig, weil an die Antriebseinheit Gelenkwellen angeschlossen werden müssen, die die Antriebsleistung auf die Antriebsräder übertragen. Wegen der Ein- und Ausfederung der Antriebsräder während des Fahrbetriebs verlagern sich die Drehachsen der Gelenkwellen gegenüber der Ruhelage fortwährend (Beugungswinkel). Je größer dieser Beugungswinkel ist, um so stärker ist der Verschleiß in den Gelenken (z.B. homokinetische Gelenke) der Gelenkwellen. Bei gleicher absoluter Ein/Ausfederung ist der Beugungswinkel um so geringer, je länger die Gelenkwelle ist. Daher ist es notwendig, die Koppeleinrichtung zwischen der Gelenkwelle und dem Rotor der elektrischen Maschine möglichst weit entfernt vom jeweiligen Antriebsrad anzuordnen. Für eine gattungsgemäße Antriebseinheit bedeutet dies, daß der Abstand zwischen den Koppeleinrichtungen der beiden aneinander angeflanschten elektrischen Maschinen möglichst klein sein sollte.

Aus der EP 0 253 999 ist ein als Einzelmotor ausgebildeter Elektroantrieb mit einem Permanentmagnet-Außenrotor bekannt. Der Motor ist ohne ein nach außen hin schützendes Gehäuse. Sein Stator ist als ringförmiger Körper ausgebildet und weist in dem von ihm umschlossenen Bauraum ein Planetengetriebe auf. Die Welle des Rotors ist mit dem Sonnenrad des Planetengetriebes bestückt und im feststehenden Planetenträger des Planetengetriebes gelagert, wobei das Sonnenrad zwischen den beiden Rotorwellenlagern angeordnet ist. Der Abtrieb des Planetengetriebes erfolgt über das Sonnenrad, das einstückig mit der Abtriebswelle ausgebildet ist. Das Sonnenrad ist ausschließlich über die Lager der Abtriebswelle gelagert, die an einem im wesentlichen zylindrischen Basisteil befestigt sind, mit dem auch der Stator und der Planetenträger fest verbunden sind. Die Abtriebswelle weist keine Koppeleinrichtungen für den lösbaren Anschluß von Elementen zur Drehmomentübertragung auf.

Aufgabe der Erfindung ist es, eine Antriebseinheit der gattungsgemäßen Art dahingehend weiterzubliden, daß bei möglichst kleinem Bauvolumen und kleiner axialer Baulänge und insbesondere möglichst kleinem Abstand zwischen den Koppeleinrichtungen der beiden Rotorwellen hohe Antriebsleistungen und insbesondere bei niedrigen Drehzahlen hohe Drehmomente zur Verfügung gestellt werden können.

Gelöst wird diese Aufgabe erfindungsgemäß durch die kennzeichnenden Merkmale des Patentanspruchs 1, Vorteilhafte Weiterbildungen der Erfindung sind in den Unteransprüchen 2 bis 15 angegeben.

Der wesentliche Grundgedanke der Erfindung besteht darin, die beiden elektrischen Maschinen in der Weise mit ihren äußeren Gehäusen aneinander zu flanschen, daß die Radkörper ihrer Außenrotoren einander zugewandt sind. Die Rotorwelle, die jeweils die Lagerung des Rotors bewerkstelligt und über die die Drehmomentübertragung erfolgt, erstreckt sich daher ausgehend etwa von der Trennebene zwischen den beiden elektrischen Maschinen durch die von den Statorwicklungen umschlossene axiale Ausnehmung des Stators. Die Lagerung der Rotorwelle ist vorzugsweise fliegend. Mit ihrem freien Ende ist eine Koppeleinrichtung für den lösbaren Anschluß einer Abtriebswelle, insbesondere einer Gelenkwelle drehfest verbunden. Die Koppeleinrichtung, die als Anschlußflansch für eine Gelenkwelle ausgebildet sein kann, ist ganz oder zumindest überwiegend innerhalb der axialen Ausnehmung des Stators angeordnet. Besonders vorteilhaft ist die Ausbildung der Koppeleinrichtung mit zusätzlicher Funktion im Sinne eines die Drehzahl der Antriebseinheit herabsetzenden und das Drehmoment entsprechend erhöhenden Planetengetriebes, das einen Anschlußflansch für die Verbindung mit einer Gelenkwelle aufweist. Die erfindungsgemäße Bauweise ermöglicht es, den Abstand zwischen den Anschlußflanschen der beiden elektrischen Maschinen sehr klein zu halten, so daß die zu erwartenden Beugungswinkel der anzuschließenden Gelenkwellen sehr klein bleiben. Dies gilt auch für die Ausführung mit Planetengetriebe. In jedem Fall ist es möglich, den Abstand so zu minimieren, daß die bei einem Fahrzeug mit konventionellem Differentialgetriebe und daran angeschlossenen Gelenkwellen die serienmäßigen Gelenkwellen unverändert auch für einen alternativen Elektroantrieb eines entsprechenden mit einer erfindungsgemäßen Antriebseinheit ausgerüsteten Fahrzeugs verwendet werden können. Im Regelfall sind die beiden elektrischen Maschinen als Elektromotoren ausgebildet und entweder beide mit oder beide ohne Planetengetriebe, also baugleich ausgeführt. Es ist aber auch möglich, im Sinne eines elektrischen Getriebes eine elektrische Maschine als Generator und nur die andere als Motor zu betreiben, wobei die Stromversorgung des Elektromotors über eine elektronisch gesteuerte Leistungselektronik durch den Generator übernommen wird. Um besonders hohe elektrische Leistungen ohne Schaden aufnehmen zu können, ist die Antriebseinheit mit einer Fluidkühlung, insbesondere einer Flüssigkeitskühlung ausgestattet, die eine schnelle Abfuhr der Verlustwärme aus den Statorwicklungen sicherstellt.

Die erfindungsgemäße Lösung hat den großen Vorteil, daß der kurze Abstand zwischen den Anschlußflanschen auch bei großer Nennleistung der eingesetzten elektrischen Maschinen gewährleistet werden kann, ohne daß der Durchmesser der elektrischen Maschinen besonders groß gewählt werden müßte, was der Bodenfreiheit des Fahrzeugs zu gute kommt. Eine höhere Leistung kann nämlich ohne weiteres durch eine entsprechende Vergrößerung der axialen Länge des aktiven Luftspalts zwischen Stator und Rotor realisiert werden, ohne daß dies wesentliche Auswirkungen auf die Rotorwelle und den Durchmesser der axialen Ausnehmung hat. Darüber hinaus bietet sich der Vorteil, daß in vielen Fällen anstelle aufwendiger homokinetischer Gelenke einfachere und billigere Kardangelenke in den anzuschließenden Gelenkwellen verwendet werden können.

Anhand der in den Figuren dargestellten Ausführungsbeispiele wird die Erfindung nachfolgend näher erläutert. Es zeigen:
- Figur 1: einen axialen Längsschnitt durch eine erfindungsgemäße Antriebsanordnung in zwei Varianten,
- Figur 2: eine Stirnseitenansicht gemäß Figur 1,
- Figur 3: eine teilweise aufgebrochene Seitenansicht einer erfindungsgemäßen Antriebsanordnung und
- Figur 4: eine Stirnseitenansicht gemäß Figur 3.

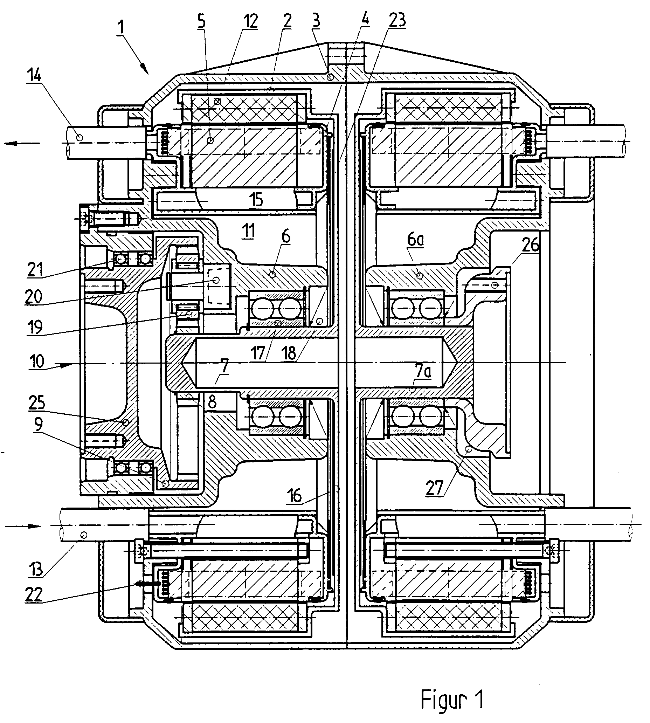

Mit der Darstellung in Figur 1 sollen zwei Varianten der Erfindung gleichzeitig dargestellt werden. In der linken Bildhälfte ist die elektrische Maschine 1 mit einem Planetengetriebe 10 für die mechanische Leistungsübertragung ausgestattet, während in der rechten Bildhälfte lediglich ein Anschlußflansch 26 vorgesehen ist. In der dargestellten Form könnte die Antriebseinheit z.B. als elektrisches Getriebe arbeiten und insoweit auch sinnvoll sein. Dabei würde die elektrische Maschine auf der rechten Seite als Generator und die elektrische Maschine 1 auf der linken Seite als Motor betrieben werden. Die Stromversorgung des Motors würde über eine nicht dargestellte elektronische Steuerung unter Nutzung der vom Generator erzeugten elektrischen Leistung erfolgen. Im Regelfall sind jedoch beide elektrischen Maschinen spiegelbildlich oder völlig baugleich ausgeführt. Im folgenden wird zunächst nur die linke Bildhälfte näher erläutert.

Der Elektromotor 1, der im Bremsbetrieb selbstverständlich auch als Generator arbeiten kann, besteht im wesentlichen aus dem äußeren Gehäuse 3, das nach Zusammenbau mit einem zweiten Elektromotor zu einer Tandemeinheit nach außen vorzugsweise völlig geschlossen ist, sowie aus dem Rotor 2 und dem Stator 4. Der Rotor 2 ist an seinem Umfang mit einer Vielzahl wechselweise gepolter Permanentmagneten 12 bestückt, die von einer äußeren Einfassung aus Blech oder einem hochfesten Kunststoff gehalten werden. Die äußere Einfassung ist fest mit einem vorzugsweise als Tiefziehkörper aus Blech hergestelltem Radkörper 16 verbunden, der als im wesentlichen scheibenförmiger Körper in kurzem Abstand parallel zur rechten Stirnseite des von den Statorwicklungen 5 gebildeten Statorrings und koaxial zu diesem angeordnet ist. Der Radkörper 16 ist im Bereich der Längsachse des Elektromotors 1 zu einem hohlen, nach links zur gegenüberliegenden Stirnseite (Abtriebsseite) hinweisenden Rotorwelle 7 einstückig ausgeformt, wobei sich der Durchmesser der Rotorwelle im Bereich ihres freien Endes in einer Stufe gegenüber dem ursprünglichen Durchmesser verringert. Das Gehäuse 3, das den Rotor 2 in kleinem Abstand außen umgibt, setzt sich über die linke Stirnseite der Antriebseinheit fort und ist mit Befestigungselementen versehen, die die Wicklungen 5 (einschließlich Statorblechpaket) des Stators 4 halten. Der Stator 4 weist um die Längsachse des Elektromotors 1 herum eine koaxiale, groß bemessene im wesentlichen zylindrische Ausnehmung 11 auf. In diese Ausnehmung 11 ragt von der linken Stirnseite her das sich in einem Nabenkörper 6 fortsetzende Gehäuse 3 des Elektromotors 1 hinein, wobei der Nabenkörper 6 bis dicht an den Radkörper 16 heranreicht. über ein Wälzlager 17, das im Bereich des größeren Wellendurchmessers positioniert ist, ist die Rotorwelle 7 fliegend in dem Nabenkörper 6 gelagert. Eine zwischen dem Wälzlager 17 und dem Radkörper 16 angeordnete Dichtung 18 dichtet den Innenraum des Nabenkörpers 6 nach außen ab. Am freien Ende der Rotorwelle 7 ist das Sonnenrad 8 eines Planetengetriebes 10 drehfest montiert und somit wie der Radkörper 16 fliegend gelagert.

Der Nabenkörper 6 muß nicht unbedingt unmittelbarer Bestandteil des Gehäuses 3 sein, sondern kann beispielsweise auch am Stator 4 befestigt sein. Anstelle der fliegenden Lagerung des Rotors 2 könnte auch eine Lagerung zu beiden Seiten des Radkörpers 16 vorgesehen sein. Hierfür kann im Bereich der Teilungsebene zwischen den beiden Gehäusehälften der Antriebseinheit z.B. eine zusätzliche Trennwand vorgesehen sein, die mit entsprechenden Lagerbohrungen für die Aufnahme von Wälzlagern versehen ist. Das Sonnenrad 8 des Planetengetriebes 10 ist in jedem Fall fliegend gelagert.

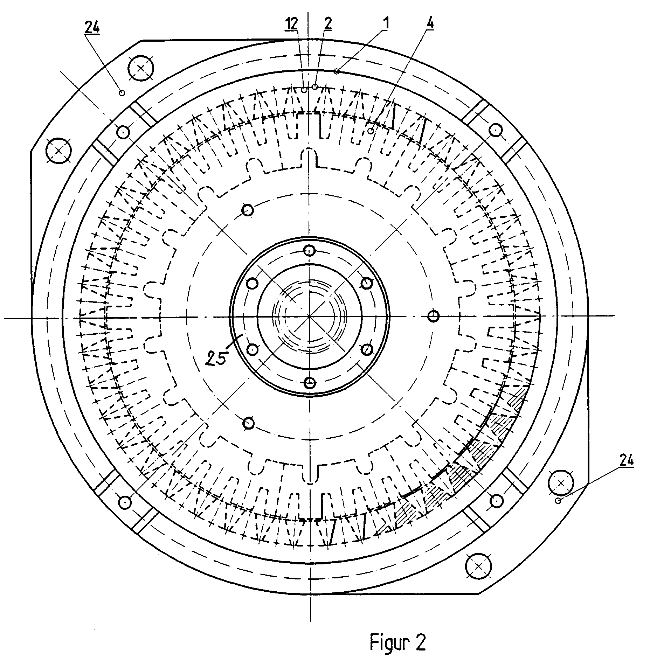

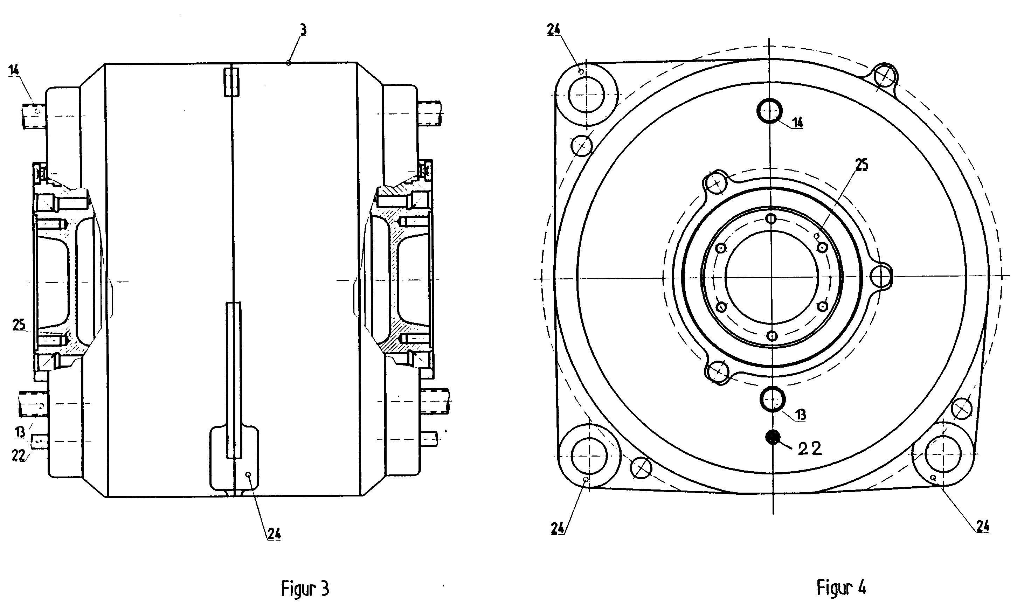

Das Sonnenrad 8 kämmt mit den Planetenrädern 19 (von denen in Figur 1 nur eines dargestellt ist), die über Achsbolzen 20 an dem Nabenkörper 6 drehbar befestigt sind. Der Nabenkörper 6 bildet somit in Baueinheit gleichzeitig auch den Planetenträger und das Gehäuse des Planetengetriebes 10. Das Hohlrad 10 an der linken Stirnseite, das mit den Planetenrädern 19 kämmt, bildet die Abtriebswelle des Planetengetriebes 10. Es ist zu diesem Zweck nach links hin in einem kurzen Hohlwellenstück fortgesetzt, an das eine Antriebsachse ankoppelbar ist. Das Hohlrad 9 ist über zwei Wälzlager 21 im Bereich der Stirnseite des Gehäuses 3 gelagert. Das Sonnenrad 8 und der Planetenträger 6 mit den Planetenrädern 19 sowie die zugehörige Lagerung liegen in dem dargestellten Ausführungsbeispiel ebenso wie der Verzahnungsbereich des Sonnenrades 10 im wesentlichen innerhalb des von den Statorwicklungen 5 eingeschlossenen Bauraums und sind somit in extrem platzsparender Weise untergebracht. Lediglich der Hohlwellenteil des Hohlrads 9 ragt geringfügig nach links aus dem Gehäuse 3 dieses axial ohnehin schon kurzen Motors (bei größerer Motorleistung würde die Länge des Luftspalts zwischen Stator und Rotor größer ausfallen) heraus. Damit ergibt sich eine äußerst kurze axiale Baulänge für die gesamte Tandem-Antriebseinheit, ohne daß deren Durchmesser sich gegenüber der bekannten Lösung vergrößert hat. Bei größeren Leistungen kann, wie zuvor beschrieben, die "innere axiale Länge" der Antriebseinheit weitgehend unverändert beibehalten werden. Um besonders hohe elektrische Leistungen bezogen auf das benötigte Bauvolumen zu realisieren, ist in dem Ausführungsbeispiel zur Ableitung der Verlustwärme eine Flüssigkeitskühlung vorgesehen, die ebenfalls in platzsparender Weise ausgeführt ist. Hierzu sind die Wicklungen 5 des Stators 4 unmittelbar an einem im Querschnitt flachen, ringförmigen Kühlmittelkanal 15 angeordnet, der mit einer Kühlmittelzuleitung 13 und einer Kühlmittelableitung 14 versehen ist. Die Kühlmittelzufuhr erfolgt zunächst über den ringförmigen Kühlmittelkanal 15, der das Planetengetriebe 10 peripher umgibt und die Aufgabe hat, das Kühlmittel in Umfangsrichtung zu verteilen. Das Kühlmittel kann dann die Wicklungen 5 umspülen und wird mit der aufgenommenen Verlustwärme über die Ableitung 14 wieder abgeführt. Eine Zuleitung für den elektrischen Strom zu den Wicklungen 5 ist bei 22 angedeutet. Mit dem Bezugszeichen 23 ist ein Resolversystem bezeichnet, das zur genauen Ermittlung der relativen Winkelstellung zwischen den Permanentmagneten 12 des Rotors 2 und den Magnetpolen der Wicklungen 5 des Stators 4 dient. Diese Winkelinformationen werden benötigt, um den elektrischen Strom zeitgerecht elektronisch zu kommutieren. In Figur 2, die eine Stirnseitenansicht der Antriebseinheit beinhaltet, sind bei 24 die Aufhängungen zur Befestigung der Antriebseinheit in einem Fahrzeug angedeutet. Eine Seitenansicht (teilweise aufgebrochen) einer spiegelbildlich baugleich ausgeführten Tandemeinheit und die zugehörige Stirnseitenansicht sind in den Figuren 3 und 4 dargestellt. Gegenüber dem Beispiel der Figuren 1 und 2, bei dem die beiden Hälften des Gehäuses 3 völlig baugleich ausgeführt sind, wurden die Aufhängungen 24 in den Figuren 3 und 4 so angeordnet, daß sich zwar eine spiegelbildliche aber nicht völlig baugleiche Ausführung ergibt.

Der Abtrieb des Planetengetriebes 10 könnte anstatt über das Hohlrad 9 auch über den Planetenträger erfolgen. In diesem Fall müßte das Hohlrad mit dem Nabenkörper 6 (z.B. durch einstückige Ausführung mit dem Nabenkörper) drehfest verbunden sein. Hierbei wären übersetzungen ins Langsame um den Faktor 2,5 - 5 ohne weiteres realisierbar. Bei der in dem Ausführungsbeispiel gemäß Figur 1 dargestellten Lösung beträgt der realisierbare Bereich etwa 1,5 - 4. Durch Austausch des Planetengetriebes gegen ein anders übersetztes kann bei diesen Lösungen ohne Veränderung der äußeren Abmessungen und ohne Veränderung des elektromotorischen Teils eine Anpassung an die Antriebserfordernisse unterschiedlicher Fahrzeuge erfolgen. Die weitere Möglichkeit, das Sonnenrad des Planetengetriebes mit dem Gehäuse und das Hohlrad mit dem Rotor zu koppeln und den Abtrieb über den Planetenträger vorzunehmen, ist weniger empfehlenswert, zumal der realisierbare übersetzungsbereich nur bei etwa 1,25 - 1,67 liegt.

Die Ausführungsvariante, die in der rechten Hälfte der Figur 1 dargestellt ist, stimmt baulich, insbesondere im Hinblick auf den elektromotorischen Teil, weitgehend mit derjenigen der linken Hälfte überein, so daß insoweit keine näheren Erläuterungen mehr erforderlich sind. Da hierbei kein Planetengetriebe vorgesehen ist, wurde der Nabenkörper 6a geringfügig geändert durch Einarbeitung einer zylindrischen Ausnehmung 27, in die der Anschlußflansch 26 für eine nicht dargestellte Gelenkwelle teilweise eingelassen ist. Entsprechend kürzer ist daher auch die Hohlwelle 7a des Rotors ausgeführt. Auf diese Weise ergibt sich ein außerordentlich kurzer axialer Abstand zwischen den Anschlußflanschen 26 einer entsprechend spiegelbildlich gebauten Antriebseinheit. Dies ermöglicht die Einhaltung sehr geringer Beugungswinkel der angeschlossenen Gelenkwellen, die daher mit kostengünstigen Kardangelenken ausgestattet sein können.

Die in den Ausführungsbeispielen dargestellten Antriebsanordnungen bieten neben dem Vorteil eines raumsparenden, äußerst drehmoment- und leistungsstarken Antriebs auch den Vorteil einer deutlichen Gewichtsersparnis. Die rotierenden Massen sind nicht zuletzt durch die dünnwandige Ausführung der Rotorwelle 7 und des Radkörpers 16 und insbesondere auch durch das vergleichsweise sehr kleine Planetengetriebe auf ein Minimum reduziert. Dies kommt nicht nur dem Gesamtgewicht eines damit ausgerüsteten Elektrofahrzeugs sondern auch dessen Beschleunigungsvermögen zugute. Ein weiterer Vorteil ist darin zu sehen, daß eine der Parksperre eines herkömmlichen Automatikgetriebes entsprechende Feststellbremse auf sehr einfache Weise realisiert werden kann, da die Rotoren 2 und die Radkörper 16 der beiden Elektromotoren 1 unmittelbar koaxial nebeneinander angeordnet sind. Am Gehäuse 3 kann ein fernbetätigbarer Sperriegel vorgesehen werden, der im Inneren im Nahbereich des Zwischenraums zwischen den beiden Elektromotoren 1 angebracht ist und im Falle der Einschaltung der Parksperre gleichzeitig in Sperrnuten eingreift, die jeweils am Rotor 2 (z.B. im peripheren Bereich des Radkörpers 16) angebracht sind, so daß eine Drehsicherung der Rotoren 2 und somit der Antriebsachsen des Fahrzeugs gegeben ist.

## Patentansprüche

1. Elektrische Antriebseinheit, insbesondere für einen Fahrzeugantrieb, bestehend aus zwei mit ihren Gehäusen (3) stirnseitig axial fluchtend aneinander angeflanschten elektrischen Maschinen (1), die jeweils folgende Merkmale aufweisen:
- einen Außenrotor (2) mit einem Radkörper (16), der jeweils auf der Stirnseite angeordnet ist, an der die beiden elektrischen Maschinen (1) aneinander angeflanscht sind,
- einen innenliegenden, aus Statorwicklungen (5) und Statorblechpaketen mit einer axialen im wesentlichen zylindrischen Ausnehmung (11) gebildeten ringförmigen Stator (4), der mit dem Gehäuse (3) fest verbunden ist,
- eine mit dem Radkörper (16) fest verbundene Rotorwelle (7), die in die axiale Ausnehmung (11) des Stators (4) hineinragt und
- eine gegenüber dem Gehäuse (3) drehbare Lagerung (20) der Rotorwelle (7), an die eine Koppeleinrichtung (8, 9, 19, 25; 26) für den Antrieb angeschlossen ist,
dadurch gekennzeichnet,
daß die Koppeleinrichtung (8, 9, 19, 25; 26) einen Anschlußflansch (25, 26) für den lösbaren Anschluß einer Abtriebswelle aufweist und im wesentlichen innerhalb der zylindrischen Ausnehmung (11) angeordnet ist.

2. Antriebseinheit nach Anspruch 1,
dadurch gekennzeichnet,
daß die Lagerung (17) der Rotorwelle (7, 7a) jeweils innerhalb eines mit dem Gehäuse (3) verbundenen Nabenkörpers (6, 6a) angeordnet ist.

3. Antriebseinheit nach Anspruch 2,
dadurch gekennzeichnet,
daß der Nabenkörper (6, 6a) Teil einer jeweils von der außenliegenden Stirnseite ausgehenden Einstülpung des Gehäuses (3) ist, die in die zylindrische Ausnehmung (11) hineinragt und vorzugsweise nahe am Radkörper (16) endet.

4. Antriebseinheit nach einem der Ansprüche 1 bis 3,
dadurch gekennzeichnet,
daß die Rotorwelle (7, 7a) jeweils fliegend, vorzugsweise unter Verwendung eines zweireihigen Wälzlagers (17) gelagert ist.

5. Antriebseinheit nach einem der Ansprüche 1 bis 4,
dadurch gekennzeichnet,
daß die Koppeleinrichtung jeweils als drehfest mit dem freien Ende der Rotorwelle (7, 7a) verbundener Anschlußflansch (26) für eine Gelenkwelle ausgebildet ist.

6. Antriebseinheit nach einem der Ansprüche 1 bis 4,
dadurch gekennzeichnet,
daß die Koppeleinrichtung jeweils als drehzahlverminderndes Planetengetriebe (10) mit einem Anschlußflansch (25) für eine Gelenkwelle ausgebildet ist, wobei das Sonnenrad (8) des Planetengetriebes (10) drehfest mit dem freien Ende der Rotorwelle (7) verbunden ist.

7. Antriebseinheit nach Anspruch 6,
dadurch gekennzeichnet,
daß die Lagerung von mindestens zwei der drei Hauptfunktionsteile (Sonnenrad 8, Planetenträger 6, Hohlrad 9) jeweils innerhalb des von den Statorwicklungen (5) umschlossenen Bauraums angeordnet ist.

8. Antriebseinheit nach einem der Ansprüche 1 bis 7,
dadurch gekennzeichnet,
daß die Rotorwelle (7, 7a) jeweils als Hohlwelle ausgebildet ist.

9. Antriebseinheit nach Anspruch 8,
dadurch gekennzeichnet,
daß der im wesentlichen scheibenförmige Radkörper (16) des Rotors (2) als Tiefziehteil einstückig mit der hohlen Rotorwelle (7, 7a) ausgebildet ist.

10. Antriebseinheit nach Anspruch 6 bis 9,
dadurch gekennzeichnet,
daß der Nabenkörper (6) jeweils den Planetenträger und das Hohlrad (9) den Abtrieb des Planetengetriebes (10) bilden.

11. Antriebseinheit nach Anspruch 6 bis 9,
dadurch gekennzeichnet,
daß das Hohlrad (9) jeweils fest mit dem Gehäuse (3) des Elektromotors (1) verbunden oder einstückig mit diesem ausgebildet ist und daß der Planetenträger den Abtrieb des Planetengetriebes (10) bildet.

12. Antriebseinheit nach einem der Ansprüche 1 bis 11,
dadurch gekennzeichnet,
daß der Rotor (2) jeweils mit einer Vielzahl von Permanentmagneten (12) bestückt ist und der elektrische Strom für die Statorwicklungen (5) elektronisch kommutiert wird.

13. Antriebseinheit nach einem der Ansprüche 1 bis 12,
dadurch gekennzeichnet,
daß die Wicklungen (5) des Stators (4) jeweils in oder unmittelbar an einem Kühlmittelkanal (15) angeordnet sind, der mit einer Kühlmittelzuleitung (13) und einer Kühlmittelableitung (14) versehen ist und den Einbauraum des Planetengetriebes (10) peripher umgibt.

14. Antriebseinheit nach einem der Ansprüche 1 bis 13,
dadurch gekennzeichnet,
daß eine der beiden elektrischen Maschinen (1) als Elektromotor und eine als elektrischer Generator ausgebildet ist und daß der Elektromotor über eine von einer elektronischen Steuerung beeinflußte Leistungselektronik mit seiner Stromversorgung an den Generator im Sinne eines elektrischen Getriebes angeschlossen ist.

15. Antriebseinheit nach einem der Ansprüche 1 bis 14,
dadurch gekennzeichnet,
daß am Gehäuse 3 ein fernbetätigbarer Sperriegel im Bereich der Teilungsebene zwischen den beiden elektrischen Maschinen (1) angeordnet ist, der bei Betätigung in Sperrnuten an den Rotoren 2 eingreift.

## Claims

1. An electric drive unit, in particular for a vehicle drive, consisting of two electric machines (1) flange-connected together with their housings (3) axially flush at their end faces, each of which machines has the following features:
- an external rotor (2) with a wheel body (16) which is located in each case on the end face on which the two electric machines (1) are flange-connected together,
- an internal annular stator (4) formed of stator windings (5) and stator laminations with an axial substantially cylindrical recess (11), which stator is securely connected to the housing (3),
- a rotor shaft (7) securely connected to the wheel body (16), which shaft projects into the axial recess (11) of the stator (4), and
- a bearing (20), rotatable relative to the housing (3), for the rotor shaft (7), to which bearing a coupling means (8, 9, 19, 25; 26) for the drive is connected,
characterised in that
the coupling means (8, 9, 19, 25; 26) has a connection flange (25, 26) for detachably connecting an output shaft and is located substantially within the cylindrical recess (11).

2. A drive unit according to Claim 1, characterised in that the bearing (17) of the rotor shaft (7, 7a) is located in each case within a hub body (6, 6a) connected to the housing (3).

3. A drive unit according to Claim 2, characterised in that the hub body (6, 6a) is part of a reverse-drawn portion of the housing (3) which starts in each case from the outer end face, which portion projects into the cylindrical recess (11) and preferably ends close to the wheel body (16).

4. A drive unit according to one of Claims 1 to 3, characterised in that the rotor shaft (7, 7a) is mounted in each case to be floating, preferably using a two-row rolling bearing (17).

5. A drive unit according to one of Claims 1 to 4, characterised in that the coupling means in each case is designed as a connection flange (26) for a cardan shaft, connected non-rotationally to the free end of the rotor shaft (7, 7a).

6. A drive unit according to one of Claims 1 to 4, characterised in that the coupling means is designed in each case as a speed-reducing planetary gear (10) with a connection flange (25) for a cardan shaft, the sun wheel (8) of the planetary gear (10) being connected non-rotationally to the free end of the rotor shaft (7).

7. A drive unit according to Claim 6, characterised in that the bearing for at least two of the three main functional parts (sun wheel 8, planetary cage 6, internal gear 9) is located in each case within the space surrounded by the stator windings (5).

8. A drive unit according to one of Claims 1 to 7, characterised in that the rotor shaft (7, 7a) is designed in each case as a hollow shaft.

9. A drive unit according to Claim 8, characterised in that the substantially disc-shaped wheel body (16) of the rotor (2) is designed as a deep-drawn part integrally with the hollow rotor shaft (7, 7a).

10. A drive unit according to Claims 6 to 9, characterised in that the hub body (6) in each case forms the planetary cage and the internal gear (9) the power take-off of the planetary gear (10).

11. A drive unit according to Claims 6 to 9, characterised in that the internal gear (9) in each case is connected securely to tee housing (3) of the electric motor (1) or is formed integrally therewith and that the planetary cage forms the power take-off of the planetary gear (10).

12. A drive unit according to one of Claims 1 to 11, characterised in that the rotor (2) is equipped in each case with a plurality of permanent magnets (12) and the electric current for the stator windings (5) is commutated electronically.

13. A drive unit according to one of Claims 1 to 12, characterised in that the windings (5) of the stator (4) are arranged in each case in or immediately on a coolant duct (15) which is provided with a coolant feed line (13) and a coolant outlet line (14), and surrounds the periphery of the installation space of the planetary gear (10).

14. A drive unit according to one of Claims 1 to 13, characterised in that one of the two electric machines (1) is designed as an electric motor and one as an electric generator and that the electric motor is connected via power electronics influenced by an electronic control means with its power supply to the generator like an electric gear.

15. A drive unit according to one of Claims 1 to 14, characterised in that a remotely actuated locking bolt is arranged on the housing (3) in the region of the parting plane between the two electric machines (1), which bar engages in locking notches on the rotors (2) when actuated.

## Revendications

1. Unité d'entraînement électrique, en particulier pour un entraînement de véhicule, constituée de deux machines électriques (1) agencées par bride avec leurs boîtiers (3) l'un contre l'autre de façon frontale, axialement à fleur, et présentant respectivement les caractéristiques suivantes :
- un rotor externe (2) comportant un corps de roue (16) qui est agencé à chaque fois sur la face frontale, sur laquelle sont montées ensemble par bride les deux machines électriques (1),
- un stator (4) annulaire, agencé à l'intérieur, formé d'enroulements de stator (5) et d'empilages de tôles de stator comprenant un évidement axial (11) qui est essentiellement cylindrique, et fixé au boitier (3),
- un arbre de rotor (7) fixé sur le corps de roue (16) et faisant saillie dans l'évidement axial (11) du stator (4), et
- un logement (20) de l'arbre de rotor (7), pouvant tourner par rapport au boitier (3), auquel est raccordé un dispositif de couplage (8,9,19,25;26) pour l'entraînement,
caractérisée en ce que le dispositif de couplage (8,9,19, 25;26) comporte une bride de raccordement (25,26) pour le raccordement amovible d'un arbre d'entraînement et est agencé essentiellement à l'intérieur de l'évidement cylindrique (11).

2. Unité d'entraînement selon la revendication 1,
caractérisée en ce que le logement (17) de l'arbre de rotor (7,7a) est agencé à chaque fois à l'intérieur d'un corps de moyeu (6,6a) relié au boîtier (3).

3. Unité d'entraînement selon la revendication 2,
caractérisée en ce que le corps de moyeu (6,6a) fait partie d'une saillie du boîtier (3), partant à chaque fois de la face centrale située à l'extérieur, faisant saillie dans l'évidement cylindrique (11) et se terminant de préférence près du corps de roue (16).

4. Unité d'entraînement selon l'une des revendications 1 à 3,
caractérisée en ce que l'arbre de rotor (7,7a) est monté à chaque fois, de façon volante, de préférence par l'utilisation de roulements (17) à double rangée.

5. Unité d'entraînement selon l'une des revendications 1 à 4,
caractérisée en ce que le dispositif de couplage est réalisé à chaque fois sous forme de bride de raccordement (26) reliée de façon solidaire en rotation à l'extrémité libre de l'arbre de rotor (7,7a), pour un arbre articulé.

6. Unité d'entraînement selon l'une des revendications 1 à 4,
caractérisée en ce que le dispositif de couplage est réalisé à chaque fois sous forme d'engrenage planétaire (10) de réduction de la vitesse de rotation, comportant une bride de raccordement (25) pour un arbre articulé, la roue solaire (8) de l'engrenage planétaire (10) étant reliée, de façon solidaire en rotation, à l'extrémité libre de l'arbre de rotor (7).

7. Unité d'entraînement selon la revendication 6,
caractérisée en ce que le logement d'au moins deux des trois éléments de fonction principale (roue solaire 8, support planétaire 6, roue creuse 9) sont agencés à chaque fois à l'intérieur de l'espace de montage entouré par les enroulements de stator (5).

8. Unité d'entraînement selon l'une des revendications 1 à 7,
caractérisée en ce que l'arbre de rotor (7,7a) est réalisé à chaque fois sous forme d'arbre creux.

9. Unité d'entraînement selon la revendication 8,
caractérisée en ce que le corps de roue (16) du rotor (2), essentiellement en forme de disque, est réalisé, sous forme de pièce d'emboutissage profond, en une seule pièce avec l'arbre de rotor creux (7,7a).

10. Unité d'entraînement selon l'une des revendications 6 à 9,
caractérisée en ce que le corps de moyeu (6) forme à chaque fois le support planétaire et la roue creuse (9) forme la prise de force de l'engrenage planétaire (10).

11. Unité d'entraînement selon l'une des revendications 6 à 9,
caractérisée en ce que la roue creuse (9) est, à chaque fois, solidaire du boitier (3) du moteur électrique (1) ou est réalisée en une seule pièce avec celui-ci, et en ce que le support planétaire forme la prise de force de l'engrenage planétaire (10).

12. Unité d'entraînement selon l'une des revendications 1 à 11,
caractérisée en ce que le rotor (2) est muni à chaque fois d'une pluralité d'aimants permanents (12) et le courant électrique pour les enroulements de stator (5) est commuté électroniquement.

13. Unité d'entraînement selon l'une des revendications 1 à 12,
caractérisée en ce que les enroulements (5) du rotor (4) sont agencés à chaque fois dans ou sur un canal de fluide de refroidissement (15) qui est muni d'une amenée de fluide de refroidissement (13) et d'une évacuation de fluide de refroidissement (14) et entoure, de façon périphérique, l'espace de montage de l'engrenage planétaire (10).

14. Unité d'entraînement selon l'une des revendications 1 à 13,
caractérisée en ce que l'une des deux machines électriques (1) est réalisée sous forme de moteur électrique et l'autre sous forme de générateur électrique, et en ce que le moteur électrique est raccordé, par l'intermédiaire d'une électronique de puissance influencée par une commande électrique, avec son alimentation en courant, au générateur, sous forme d'une transmission électrique.

15. Unité d'entraînement selon l'une des revendications 1 à 14,
caractérisée en ce que sur le boîtier (3) est agencé un verrou de sûreté pouvant être actionné à distance, dans la zone du plan de séparation entre les deux machines électriques (1), verrou de sûreté qui agit lors de l'actionnement dans des gorges d'arrêt sur les rotors (2).
